# EUROPEAN PATENT APPLICATION

(11) **EP 1 427 084 A2**
(43) Date of publication of application: **09.06.2004**
(21) Application number: 03027304.9
(22) Date of filing: 26.11.2003
(51) Int. Cl.: H02J 7/00

(54) **Method and apparatus to charge a plurality of batteries**

(30) Priority: 02.12.2002 KR 2002076010
(71) Applicant: LG ELECTRONICS INC., Seoul (KR)
(72) Inventor: Kim, Sang-woo, Seoul (KR); Kim, Jung-sam, Gwangmyeong City Gyeonggi-do (KR)
(74) Representative: von Hellfeld, Axel, Dr. Dipl.-Phys.

(57) **Abstract**

A method is provided for charging a plurality of batteries (55,56). A plurality of batteries (55,56) may be charged using charging voltage/current characteristics. Charging operations among the multiple batteries (55,56) may be repeatedly performed. A first battery (55) may be charged with a constant current until a voltage of the first battery becomes more than a reference voltage. Additionally, after charging of a second battery (56) with the constant current is started, charging of a second battery (56) may occur until a voltage of the second battery becomes more than a reference voltage. Charging of the first battery (55) may be resumed if a charging current is not more than a reference current. Additionally, charging of the second battery (56) may be resumed if the charging current is not more than the reference current. After charging of the first battery (55) is resumed, and if the charging current is not more than a limit current indicating a state of full charging, then charging of the first battery (55) is stopped. Additionally, after charging of the second battery (56) is resumed, and if the charging current is not more than the limit current indicating the state of full charging, then charging of the second battery (56) is stopped.

## Description

### BACKGROUND OF THE INVENTION

### 1. Field of the Invention

Embodiments of the present invention relate to a method for charging a plurality of batteries. More particularly, embodiments of the present invention relate to a method for charging a plurality of batteries based on charging voltage/current characteristics and in which charging operations among the batteries are alternatively repeated.

### 2. Background of Related Art

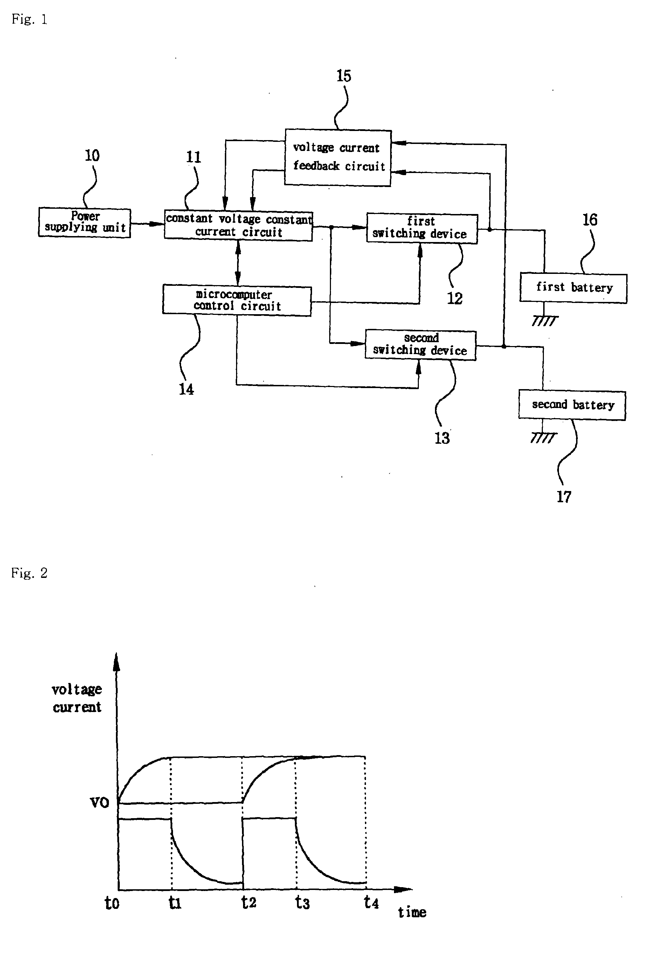

FIG. 1 shows a configuration and methodology for charging batteries according to an example arrangement. A power supplying unit (AC/DC Adapter) 10 is connected with a constant voltage/constant current circuit 11 such that a voltage and a current input to the power supplying unit 10 are converted into a constant voltage and a constant current with constant DC levels. The constant voltage and the constant current converted in the constant voltage/constant current circuit 11 are input to a first battery 16 and a second battery 17 selectively through a first switching device 12 and a second switching device 13, thereby charging the first and second batteries. The voltages and currents output from the first switching device 12 and the second switching device 13 are supplied to the constant voltage/constant current circuit 11 through a voltage current feedback circuit 15. The constant voltage/constant current circuit 11, the first switching device 12 and the second switching device 13 are controlled by a microcomputer control circuit 14.

FIG. 2 shows a procedure of charging the batteries using with the microcomputer control circuit 14. In FIG. 2, the horizontal axis X represents a charging time of a battery, and the vertical axis Y represents voltage and current of a battery.

The charging time intervals t0∼t2 are charging regions of the first battery. The intervals t0∼t1 are constant current regions and the intervals t1∼t2 are constant voltage regions of the first battery. In the intervals, a first charging voltage and a first charging current are provided at the same time.

The charging time intervals t2∼t4 are charging regions of the second battery. The intervals t2∼t3 are constant current regions and the intervals t3∼t4 are constant voltage regions of the second battery. In the intervals, a second charging voltage and a second charging current are provided at the same time.

The microcomputer control circuit 14 controls the constant voltage/constant current circuit 11 and the first switching device 12 so that the first battery 16 can be charged during the intervals t0∼t2 and the second battery 17 is not charged during charging of the first battery 16 (based on operations of the second switching device 13).

After the charging operation of the first battery 16 is complete, the microcomputer control circuit 14 controls the constant voltage/constant current circuit 11 and the second switching device 13 so that the second battery 17 can be charged during the intervals t2∼t4 and so that the first battery is not charged during charging of the second battery 17 (based on operations of the first switching device 12). Charging of the second battery 17 may also be performed prior to charging the first battery 16.

As discussed above, a plurality of batteries are charged such that all the charging of the first battery is completely performed and then charging of the second battery starts. On the other hand, all the charging of the second battery may be completely performed and then charging of the first battery starts. In other words, the above described methodology sequentially charges the multiple batteries. Therefore, the available current supplied from an adapter of the power supplying unit 10 may be not efficiently used so that the charging time is delayed. This may be a problem.

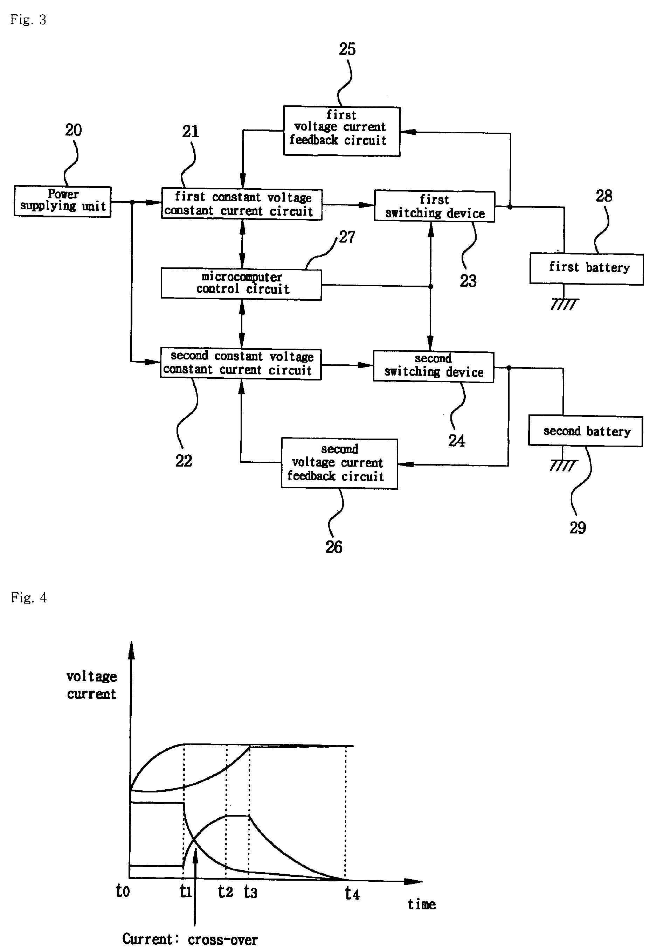

FIG. 3 shows a configuration and methodology for charging batteries according to an example arrangement. More specifically, FIG. 3 shows that a power supplying unit (AC/DC Adapter) 20 is connected to a first constant voltage/constant current circuit 21 and a second constant voltage/constant current circuit 22 where a voltage and a current input to the power supplying unit 20 is converted into a constant voltage and a constant current with constant DC levels. The constant voltage and the constant current converted with the first constant voltage/constant current circuit 21 and the second constant voltage/constant current circuit 22 are input to the first battery 28 and the second battery 29 through a first switching device 23 and a second switching device 24, respectively, thereby charging the first battery 28 and the second battery 29. The voltage and current output from the first switching device 23 and the second switching device 24 are supplied to a first constant voltage/constant current circuit 21 and a second constant voltage/constant current circuit 22 through a first voltage current feedback circuit 25 and a second voltage current feedback circuit 26, respectively.

The first constant voltage/constant current circuit 21, the second constant voltage/constant current circuit 22, the first switching device 22 and the second switching device 23 are controlled by a microcomputer control circuit 27.

FIG. 4 shows a procedure of charging the batteries using the microcomputer control circuit 27. In FIG. 4, the horizontal axis X represents a charging time of a battery, and the vertical axis Y represents voltage and current of a battery.

The charging time intervals t0∼t4 are charging regions of the first battery. The intervals t0∼t1 are constant current regions where a first charging voltage and a first charging current are provided at the same time. The intervals t1∼t4 are constant voltage regions of the first battery.

The charging time intervals t2∼t4 are charging regions of the second battery. The intervals t2∼t3 are constant current regions and the intervals t3∼t4 are constant voltage regions of the second battery. The intervals t1∼t3 are second charging voltage regions and the intervals t3∼t4 are second charging current regions of the second battery.

The microcomputer control circuit 27 controls the first constant voltage/constant current circuit 21 and the first switching device 23 to charge the first battery 28. The microcomputer control circuit 27 senses that the charging current starts to drop at a cross-over time (i.e., the intervals t1∼t2 when the charging operation of the first battery 28 changes from constant current to constant voltage). Then, the microcomputer control circuit 27 controls the first constant voltage/constant current circuit 21 and the first switching device 23 to keep the first battery 28 charged. At the same time, the microcomputer control circuit 27 controls the second constant voltage/constant current circuit 22 and the second switching device 24 so that charging of the second battery 29 can start. In other words, the control circuit 27 controls the first switching device 23 to keep the first battery 28 charged during charging of the second battery 29.

Therefore, even though charging of the first battery 28 starts before charging of the second battery 29, charging operations of both batteries can be completed substantially at the same time.

The microcomputer control circuit 27 may sense that the charging current starts to drop at the cross-over time (i.e., the intervals t1∼t2 when charging operations of the first battery 28 changes from constant current to constant voltage). At the same time, the first battery 28 is continuously charged and charging of the second battery 29 starts using the reduced charging current of the first battery 28. The current of the second battery 29 is reduced from the constant current, and at the time of the charging voltage changed into the constant voltage, the whole charging current starts to be reduced. Then, in a predetermined time interval, the charging operations of the first battery 28 and the second battery 29 are completed. However, there is a problem that the first battery still has a long charging time.

### SUMMARY OF THE INVENTION

An object of the invention is to solve at least the above problems and/or disadvantages and to provide at least the advantages described hereinafter.

Embodiments of the present invention may provide a method for charging multiple batteries with a minimized charging time. An under-charged first battery may be checked in voltage and current during charging of multiple batteries (in a mobile communication terminal). When the checked voltage and checked current of the first battery becomes a reference voltage and reference current, then the charging operation of the first battery is temporarily stopped, and charging of a second battery proceeds. When the voltage and current of the second battery becomes the reference voltage and reference current, then charging operations of the second battery is temporarily stopped and charging of the first battery again proceeds. The voltages and currents of the multiple batteries are checked and the charging operations among the multiple batteries are repeatedly performed, thereby complementarily charging the multiple batteries. This makes it possible to shorten the charging time.

Embodiments of the present invention may include a charge starting operation wherein a charging apparatus is power-supplied to charge the multiple batteries. Battery mount checking operations may check whether the multiple batteries are mounted at corresponding positions on the charging apparatus. A charging voltage/current characteristic identifying operation may identify charging voltage/current operation characteristics of the mounted under-charged batteries. A first battery-cross-over charging operation may charge a predetermined first battery according to results of the battery mount checking operation and charging voltage/current operation characteristics and charging of the second battery may stop. In a second battery-cross-over charging operation, the charging operation of the under-charged first battery may be temporarily stopped in a first predetermined time interval according to a first charging voltage/current characteristic of the under-charged first battery during the first battery-cross-over charging operation and charging operation of the second battery proceeds. In a third battery-cross-over charging operation, the charging operation of the under-charged second battery may be temporarily stopped in a second predetermined time interval according to a charging voltage/current characteristic of the under-charged second battery during the second battery-cross-over charging operation and charging operation of the first battery resumes. In a fourth battery-cross-over charging operation, the charging operation of the under-charged first battery may be temporarily stopped in a third predetermined time interval according to a second charging voltage/current characteristic of the under-charged first battery during the third battery-cross-over charging operation and charging operation of the second battery may be resumed. In a battery charging completion operation, the charging operation of the under-charged first or second battery is completed according to full charging voltage/current characteristics of the under-charged first or second battery provided with the operations of the third and fourth battery-cross-over charging operations.

The charging voltage/current characteristics may have a voltage gradient or a current gradient according to a charging voltage/current of a battery.

When the voltage of the battery gradually rises, the current may go to a constant current and then the current gradient may go to substantially zero. Thereby, the voltage of the battery having a predetermined gradient, and when the battery is charged by some degree of charging, the current may drop, the current gradient may have a negative value and then the battery may have a constant voltage zone, such that the voltage of the voltage gradient becomes substantially zero.

In the first charging voltage/current characteristic, the voltage gradient may be more than zero, the charging voltage may have a reference of approximately 4.0V and the charging current may have references of approximately 100mA and approximately 200mA. In the second charging voltage/current characteristic, the voltage gradient may be more than zero, the charging voltage may have a reference of approximately 4.2V and the charging current may have references of approximately 100mA and approximately 200mA.

In the first battery charging operation, the voltage gradient of the under-charged first battery may be more than zero and the charging voltage of the under-charged first battery is not more than approximately 4.0V. If the voltage gradient is not more than zero and the charging current is not more than approximately 100mA and not less than approximately 200mA, then the first battery may be charged and the second battery may not be charged.

In the second battery-cross-over charging operation, the voltage gradient of the under-charged second battery may be more than zero and the charging voltage of the under-charged second battery may be not more than approximately 4.0V. If the voltage gradient is not more than zero and the charging current is not more than approximately 100mA and not less than approximately 200mA, then the second battery may be charged and the first battery may not be charged.

In the first battery recharging operation, the voltage gradient of the under-recharged first battery may be more than zero and the charging voltage of the under-recharged first battery may be less than approximately 4.2V. If the voltage gradient is not more than zero and the charging current is not less than approximately 200mA, then the first battery may be charged and the second battery may not be charged.

In the second battery-cross-over recharging operation, the voltage gradient of the under-recharged second battery may be more than zero and the charging voltage of the under-recharged second battery may not be less than approximately 4.2V. If the voltage gradient is not more than zero and the charging current is not less than approximately 200mA, then the second battery may be charged and the first battery may not be charged.

In the charging completion operation, if the voltage gradient of the under-recharged first or second battery is not more than zero and the charging current is less than approximately 200mA and not more than approximately 100mA, then charging operations may be completed.

Embodiments of the present invention may include a voltage reference charging operation wherein after charging of a first battery with a constant current is started, if a voltage of the first battery becomes more than a reference voltage, then charging of the first battery is stopped. After charging of a second battery with the constant current is started, if a voltage of the second battery becomes more than the reference voltage, then charging of the second battery is stopped. In a current reference charging operation, after charging of the first battery is resumed, if a charging current is not more than a reference current, then charging of the first battery is stopped, and after charging of the second battery is resumed, if the charging current is not more than the reference current, then charging of the second battery is stopped. In a charging completion operation, after charging of the first battery is resumed, if the charging current is not more than a limit current indicating a state of full charging, then charging of the first battery is stopped, and after charging of the second battery is resumed, if the charging current is not more than the limit current indicating the state of full charging, then charging of the second battery is stopped.

The reference voltage may be set to be from approximately 70% to approximately 80% of a full charging voltage. The reference current may be set to be a current at the time of approximately 80% of the state of full charging. The limit current may be set to be a current at the time of approximately 95% of the state of full charging.

Embodiments of the present invention may include a voltage reference charging operation wherein until a charging voltage of an under-charged battery becomes a reference voltage, charging of a first battery with a constant current continues during a first predetermined time interval and then is stopped. Charging of a second battery with a constant current continues during a second predetermined time interval and then is stopped. Charging operations of a third battery and a fourth battery with a constant current continue during third and fourth predetermined time intervals, respectively, and then are stopped. Charging of the first battery may be resumed, and the series of charging may be repeated thereby the charging up to the voltage reference is performed to alternatively charge the multiple batteries until charging voltages of the multiple batteries become the reference voltages.

In a current reference charging operation, after charging of the first battery is resumed, if a charging current is not more than a reference current, then charging of the first battery is stopped. After charging of the second battery is resumed, if the charging current is not more than the reference current, charging of the second battery is stopped. The same charging process for the third and fourth batteries is carried out. In a charging completion operation, after charging of the first battery is resumed, if the charging current is not more than a limit current indicating a state of full charging, then charging of the first battery is stopped. After charging of the second battery is resumed, if the charging current is not more than the limit current indicating the state of full charging, then charging of the second battery is stopped. The same charging process for the third and fourth batteries is carried out.

The reference voltage may be set to be from approximately 70% to approximately 80% of a full charging voltage. The reference current may be set to be a current at the time of approximately 80% of the state of full charging. The limit current may be set to be a current at the time of approximately 95% of the state of full charging.

Additional advantages, objects, features and embodiments of the invention will be set forth in part in the description that follows and in part will become apparent to those having ordinary skill in the art upon examination of the following or may be learned from practice of the invention.

### BRIEF DESCRIPTION OF THE DRAWINGS

The above and other objects, advantages, features and embodiments of the present invention will become apparent from the following drawings, in which like reference numerals represent like elements and wherein:

FIG. 1 is a block diagram illustrating a battery charging operation according to an example arrangement;

FIG. 2 is a graph showing voltage/current versus time according to an example arrangement;

FIG. 3 is a block diagram illustrating a battery charging operation according to an example arrangement;

FIG. 4 is a graph showing voltage/current versus time according to an example arrangement;

FIG. 5 is a block diagram illustrating a battery charging method according to an example embodiment of the present invention;

FIGS. 6a and 6b are graphs illustrating voltage/current cross-over charging characteristics of multiple batteries according to an example embodiment of the present invention;

FIG. 7 is a graph illustrating a voltage/current versus time characteristic according to an example embodiment of the present invention; and

FIGS. 8a and 8b are flow charts illustrating charging operations according to an example embodiment of the present invention.

### DETAILED DESCRIPTION OF PREFERRED EMBODIMENTS

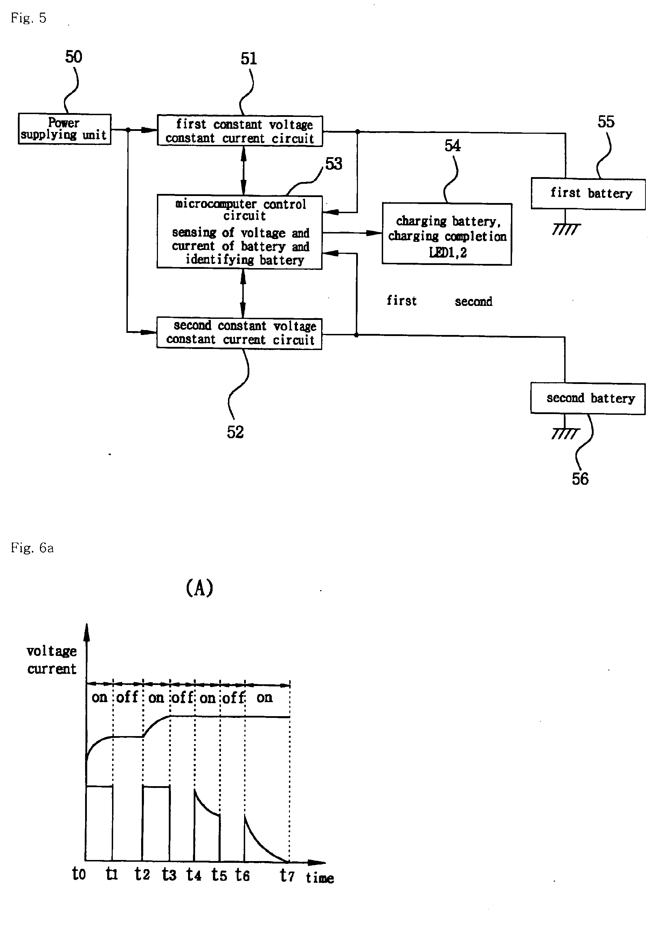

FIG. 5 is a block diagram illustrating a battery charging circuit according to an example embodiment of the present invention. Other embodiments and configurations are also within the scope of the present invention. As shown, a power supplying unit (AC/DC adapter) 50 is connected to a first constant voltage/constant current circuit 51 and a second constant voltage/constant current circuit 52. A voltage and a current input to the power supplying unit 50 are converted into a constant voltage and a constant current having a constant DC level. The constant voltage and the constant current generated in (or output from) the first constant voltage/constant current circuit 51 and the second constant voltage/constant current circuit 52 are input to a first battery 55 and a second battery 56, respectively. The first constant voltage/constant current circuit 51 and the second constant voltage/constant current circuit 52 are controlled by a microcomputer control circuit 53. Additionally, light emitting diodes LED1 and LED2 are connected to the control circuit 53 to display charging procedures.

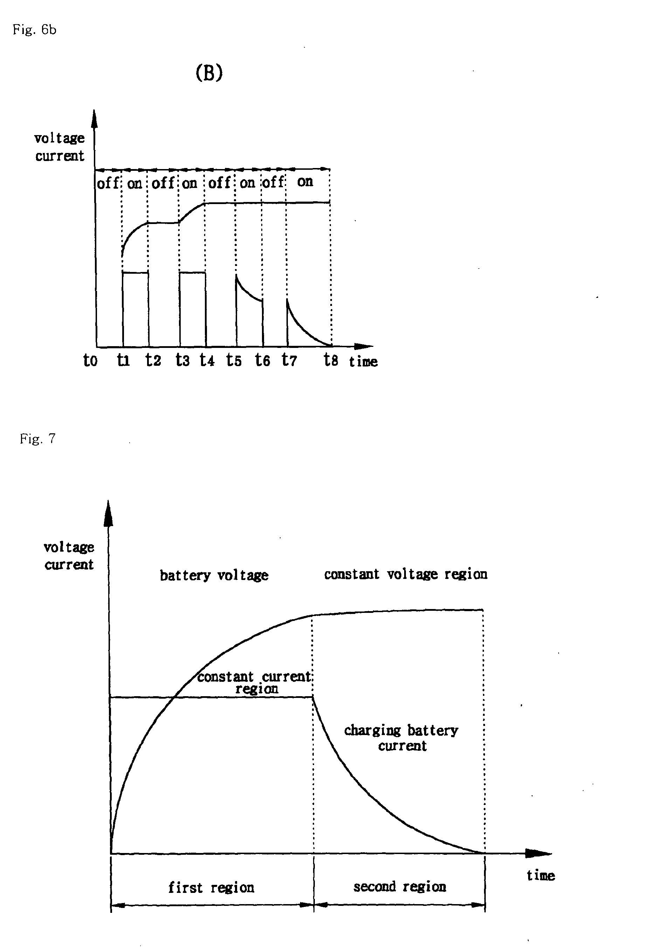

FIGS. 6a-6b show charging procedures of the batteries using the microcomputer control circuit 53 according to an example embodiment of the present invention. More specifically, FIG. 6a is a graph illustrating charging procedures of the first battery 55 and FIG. 6b is a view illustrating charging procedures of the second battery 56. In both FIG. 6a and FIG. 6b, the horizontal axis X represents a charging time, and the vertical axis Y represents voltage and current of a battery.

In FIG. 6a, charging time intervals t0∼t1 and t2∼t3 of the first battery 55 are constant current regions (i.e., a first charging current region) of the first battery, charging time intervals t4∼t5 and t6∼t7 are constant voltage regions (i.e., a first charging voltage region) of the first battery, and charging time interval t7 is a charging completion time of the first battery.

In FIG. 6b, charging time intervals t1∼t2 and t3∼t4 of the second battery 56 are constant current regions (i.e., a second charging current region) of the second battery, charging time intervals t5∼t6 and t7∼t8 are constant voltage regions (i.e., a second charging voltage region) of the second battery, and charging time interval t8 is a charging completion time of the second battery.

The microcomputer control circuit 53 turns ON the first constant voltage/constant current circuit 51 to charge the first battery 55 at an allowable maximum constant current. The second battery is not charged at this time.

After charging of the first battery 55 starts, if the voltage value of the first battery rises to a predetermined voltage value (e.g., approximately 70% to approximately 80% of the full charging voltage) at the time t1, the first constant voltage/constant current circuit 51 is turned OFF to stop charging the first battery 55, and the second constant voltage/constant current circuit 52 is turned ON to start charging the second battery 56.

After charging of the second battery 56 starts, if the voltage value of the second battery rises up to a predetermined voltage value (e.g., approximately 70% to approximately 80% of the full charging voltage) at the time t2, the second constant voltage/constant current circuit 52 is turned OFF to stop charging the second battery 56, and the first constant voltage/constant current circuit 51 is turned ON to start recharging the first battery 55.

After recharging of the first battery 55 starts, if the voltage value of the first battery rises up to a predetermined voltage value (e.g., approximately 80% to approximately 95% of the full charging voltage) at the time t3, the first constant voltage/constant current circuit 51 is turned OFF to stop charging the first battery 55, and the second constant voltage/constant current circuit 52 is turned ON to start recharging the second battery 56.

After recharging of the second battery 56 starts, if the voltage value of the second battery rises up to a predetermined voltage value (e.g., approximately 80% to approximately 95% of the full charging voltage) at the time t4, the second constant voltage/constant current circuit 52 is turned OFF to stop charging the second battery 56, and the first constant voltage/constant current circuit 51 is turned ON to start recharging the first battery 55. During the charging procedure of the first battery 55, if the charging voltage rises to approximately 100%, then a reduction of current starts. The more closely the charging capacity rises toward 100%, the more the charging current is gradually reduced.

When the first battery 55 is charged to have substantially a full charging voltage, a check is made whether the charging current becomes a constant charging state, (e.g., approximately 80% to 90% charging state or 100% charging state) in a predetermined time after the charging current starts to be reduced. Then, at the time t5, charging of the first battery is stopped, and recharging of the second battery starts. In this case, the method of checking the charging state is performed by checking and calculating battery capacity, charging voltage and charging current, as will be described below.

The second battery may be checked with a similar methodology. If the charging state of the second battery approaches a constant level, then at the time t6, charging for the second battery is stopped, and recharging of the first battery is started. A determination is made whether the charging state of the first battery approaches a full charging state or not. If the second battery is in the full charging state, then at the time t8 the charging operation is stopped, and an indication of a full charging of the second battery is displayed on a LED 2.

A methodology of the first battery 55 and the second battery 56 being alternatively charged with maximum currents is described above. This methodology may also be performed in divided steps. That is, embodiments of the present invention may be performed in a manner such that charging with a maximum charging current may be carried out once and charging under the state of the reduced charging current may be divided into several steps. Further, when the charging current for the previously charged battery (i.e., the first battery) is reduced, then charging of the first battery may not be stopped while the second battery is charged. In other words, if the sum of the charging currents of the first battery 55 and the second battery 56 is less than a maximum allowable current, then the first battery 55 and the second battery 56 may be charged at the same time. FIG. 7 shows a curve of voltage/current versus time characteristics for the first battery 55 and the second battery 56. The curve may have a voltage gradient or current gradient depending on the voltage/current states of the under-charged battery.

In other words, in the first region the voltage of the battery is gradually rising, charging with a constant current is performed, the current gradient substantially becomes zero, and the battery has a predetermined positive voltage. When the battery is charged to some degree, the charging current starts to be reduced as shown in the second region. Then, the charging current has a negative gradient, and voltage of the battery has a region of constant voltage with a voltage gradient of substantially zero.

Therefore, if the voltages and currents of the first battery 55 and the second battery 56 are checked, a state of the charging of current and voltage of the corresponding battery can be obtained.

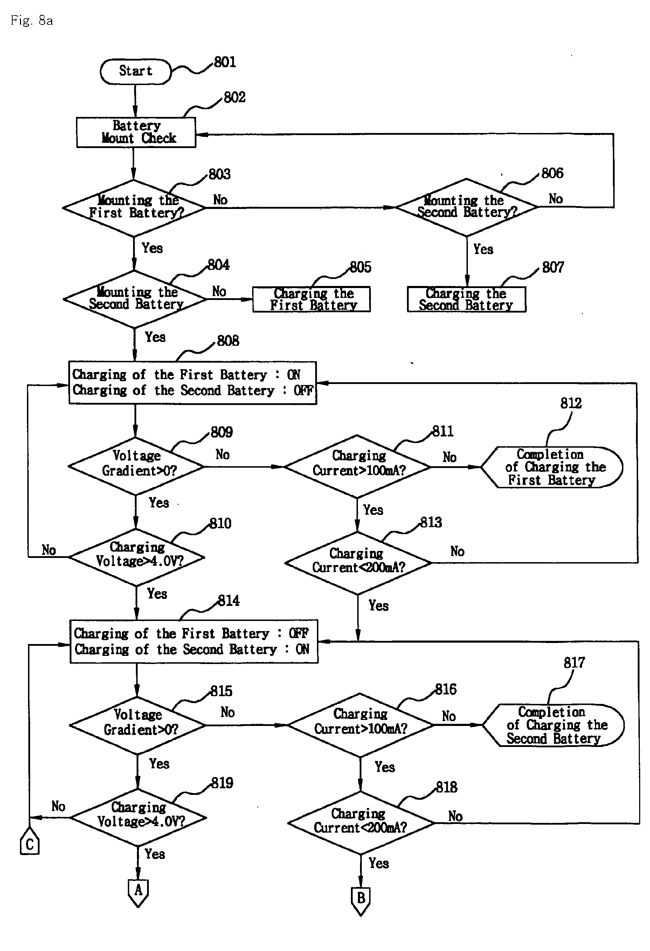

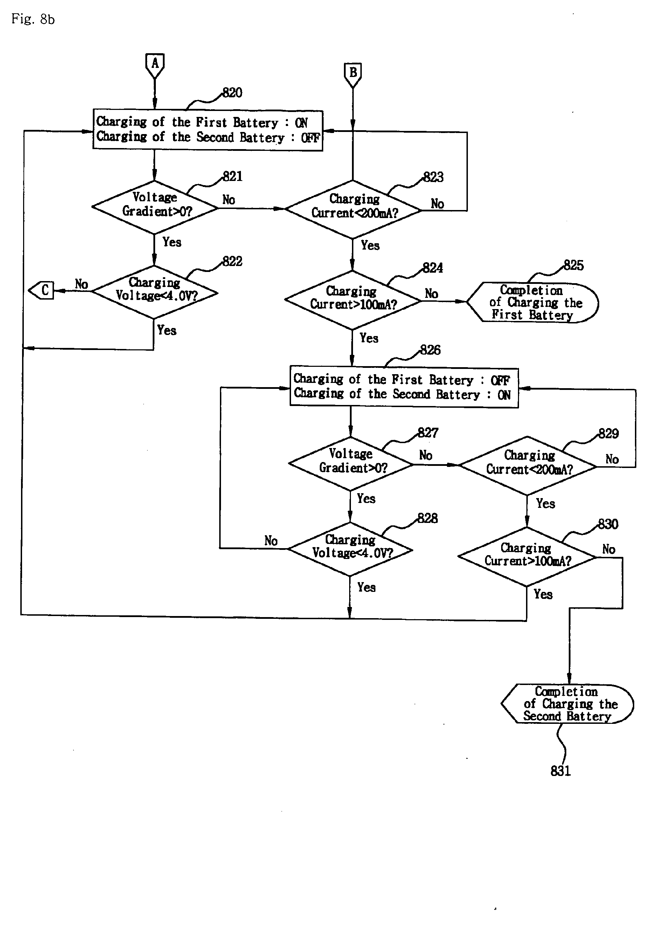

FIGS. 8a and 8b are flow charts illustrating charging operations according to an example embodiment of the present invention. Other operations, orders of operations and embodiments are also within the scope of the present invention. When power is supplied to the battery charging apparatus with the power supplying unit, a charging operation is started (801). In the first battery mount determination (803), it is determined whether the first battery is mounted in order to check the first battery mounted (802). If the result of the first battery mount determination (803) is that the first battery is mounted, it is then determined whether the second battery is mounted in a second battery mount determination (804).

If the result of the second battery mount determination (804) is that the second battery is not mounted, then the first battery is charged (805). If the result of the first battery mount determination (803) is that the first battery has not yet been mounted, then a determination is made whether the second battery is mounted in a second battery mount determination (806).

If the result of the second battery mount determination (806) is that the second battery is not mounted, then the procedure returns to the battery mounting check (802). If the result of the second battery mount determination (806) is that the second battery is mounted, then the mounted second battery is charged (807).

If the result of the second battery mount determination (804) is that the second battery is mounted, then a first battery cross-over charging (808) proceeds to turn ON charging of the first battery during a predetermined time interval and to turn OFF the second battery.

After the first battery cross-over charging (808) proceeds, it is determined whether the voltage gradient is more than zero in a voltage gradient determination (809) in order to check the voltage gradient of the under-charged first battery.

If the result of the voltage gradient determination (809) is that the voltage gradient of the first battery is not more than zero, then a determination is made in a charging current determination (811) whether the charging current is more than a first reference current (e.g., 100mA).

If the result of the charging current determination (811) is that the charging current is not more than 100mA, then charging of the first battery is completed (812). If the result of the charging current determination (811) is that the charging current is more than 100mA, then a determination is made in a next charging current determination (813) whether the charging current of the first battery is more than a second reference current (e.g., 200mA).

If the result of the charging current determination (813) is that the charging current is not less than 200mA, then the first battery cross-over charging (808) turns ON the charging of the first battery and turns OFF the charging of the second battery during a predetermined time interval. If the result of the charging current determination (813) is that the charging current is less than 200mA, then a second battery cross-over charging (814) proceeds to turn OFF the charging of the first battery and to turn ON the charging of the second battery during a predetermined time interval.

If the result of the voltage gradient determination (809) is that the voltage gradient is more than zero, then it is determined in a charging voltage determination (810) whether the charging voltage of the first battery is more than the first reference voltage (e.g., 4.0V). If the result of the charging voltage determination (810) is that the charging voltage is not more than 4.0V, then the first battery cross-over charging (808) proceeds to turn ON the charging of the first battery and to turn OFF the second battery in a predetermined time interval. If the result of the charging voltage determination (810) is that the charging voltage is more than 4.0V, then the second battery cross-over charging (814) proceeds to turn OFF the charging of the first battery and to turn ON the second battery in a predetermined time interval.

After the second battery cross-over charging (814), a determination is made in a voltage gradient determination (815) whether the voltage gradient of the second battery is greater than zero.

If the result of the voltage gradient determination (815) is that the voltage gradient of the second battery is not more than zero, then a determination is made in a charging current determination (816) of the second battery whether the charging current is more than 100mA.

If the result of the charging current determination (816) is that the charging current is not more than 100mA, then the charging of the second battery is completed. If the result of the charging current determination (816) is that the charging current is more than 100mA, then a determination is made in a next charging current determination (818) whether the charging current of the second battery is more than 200mA.

If the result of the charging current determination (818) is that the charging current is not less than 200mA, then the second battery cross-over charging (814) proceeds to turn OFF the charging of the first battery and to turn ON the charging of the second battery in a predetermined time interval. If the result of the charging current determination (818) is that the charging current is less than 200mA, then a third battery cross-over charging (820) proceeds to turn ON the charging of the first battery again and to turn OFF the charging of the second battery in a predetermined time interval.

If the result of the voltage gradient determination (815) is that the voltage gradient of the second battery is more than zero, then a determination is made in a charging voltage determination (819) whether the charging voltage is more than 4.0 V. If the result of the charging voltage determination (819) is that the charging voltage is not more than 4.0 V, then the second battery cross-over charging (814) proceeds to turn OFF the charging of the first battery and to turn ON the charging of the second battery in a predetermined time interval. If the result of the charging voltage determination (819) is that the charging voltage is more than 4.0 V, then the third battery cross-over charging (820) proceeds to turn ON the charging of the first battery and to turn OFF the charging of the second battery in a predetermined time interval.

After the third battery cross-over recharging (820) proceeds, a determination is made in a voltage gradient determination (821) whether the voltage gradient of the under-recharged first battery is more than zero in order to again check the voltage gradient of the first battery.

If the result of the voltage gradient determination (821) is that the voltage gradient is more than zero, then a determination is made in a charging voltage determination (822) whether the charging voltage of the under-recharged battery is more than a second reference voltage (e.g., 4.2V). If the result of the charging voltage determination (822) is that the charging voltage is not less than 4.2 V, then the second battery cross-over charging (814) proceeds to turn ON the charging of the first battery and to turn OFF the charging of the second battery in a predetermined time interval. If the result of the charging voltage determination (822) is that the charging voltage of the under-recharged first battery is less than 4.2 V, the third battery cross-over recharging (820) proceeds to turn ON recharging of the first battery and to turn OFF the charging of the second battery in a predetermined time interval.

If the result of the voltage gradient determination (821) is that the voltage gradient of the under-recharged first battery is not more than zero, then a determination is made in a charging current determination (823) whether the charging current of the under-recharged first battery is more than 200mA.

If the result of the charging current determination (823) is that the charging current is not less than 200mA, then the third battery cross-over recharging (820) proceeds to turn ON the recharging of the first battery and to turn OFF the charging of the second battery in a predetermined time interval. If the result of the charging current determination (823) is that the charging current is less than 200mA, then a determination is made in a charging current determination (824) whether the charging current of the under-recharged first battery is more than 100mA.

If the result of the charging current determination (824) is that the charging current is not more than 100mA, then the recharging of the first battery is completed. If the result of the charging current determination (824) is that the charging current is more than 100mA, then a fourth battery cross-over recharging (826) proceeds to turn OFF the charging of the first battery and to turn ON the charging of the second battery again in a predetermined time interval.

After the fourth battery cross-over recharging (826) proceeds, a determination is made in a voltage gradient determination (827) whether the voltage gradient of the under-recharged second battery is greater than zero in order to check the voltage gradient of the under-recharged second battery.

If the result of the voltage gradient determination (827) is that the voltage gradient of the under-recharged second battery is more than zero, a determination is made in a charging voltage determination (828) whether the charging voltage of the under-charged second battery is more than 4.2 V. If the result of the charging voltage determination (828) is that the charging voltage is not less than 4.2 V, then the fourth battery cross-over recharging (826) proceeds to turn OFF the charging of the first battery and to turn ON the charging of the under-recharged second battery in a predetermined time interval. If the result of the charging voltage determination (828) is that the charging voltage of the under-recharged second battery is less than 4.2 V, then the third battery cross-over recharging (820) proceeds to turn ON the charging of the first battery and to turn OFF the charging of the second battery in a predetermined time interval.

If the result of the voltage gradient determination (827) is that the voltage gradient of the under-recharged second battery is not more than zero, then a determination is made in the charging current determination (829) whether the charging current of the under-recharged second battery is more than 200mA.

If the result of the charging current determination (829) is that the charging current is not less than 200mA, then the fourth battery cross-over charging (826) proceeds to turn OFF charging of the first battery and to turn ON charging of the second battery in a predetermined time interval. If the result of the charging current determination (829) is that the charging current of the under-recharged second battery is less than 200mA, then the charging current determination (830) proceeds to determine whether the charging current is more than 100mA.

If the charging current determination (830) is that the charging current is more than 100mA, the third battery cross-over recharging (820) proceeds to turn ON charging of the first battery and to turn OFF charging of the second battery in a predetermined time interval. If the result of the charging current determination (830) is that the charging current is not more than 100mA, then charging of the second battery is complete (831).

The reference currents and voltages described herein are illustrated only for providing examples. The values of the reference currents and voltages depend on the capacities and voltage/current characteristics of the battery to be charged. Therefore, the values may be chosen based on the type of battery. In other words, the reference currents and voltages may be selected and used in accordance with the type of battery.

Embodiments of the present invention may provide a method and apparatus for charging multiple batteries. An under-charged first battery is checked in voltage and current during the charging of the multiple batteries in a mobile communication terminal. When the checked voltage and current of the first battery becomes a reference voltage and current, the charging operation of the first battery is temporarily stopped, and charging of the second battery proceeds. When the voltage and current of the second battery becomes the reference voltage and current, the charging operation of the second battery is temporarily stopped and charging of the first battery again proceeds. Accordingly, voltages and currents of the multiple batteries are checked and the charging operations among the multiple batteries are repeatedly performed thereby complementarily charging the multiple batteries so that it is possible to shorten the charging time.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art.

## Claims

1. A method of charging a plurality of batteries comprising:
charging a first battery with a constant current until a voltage of said first battery becomes greater than a reference voltage;
charging a second battery with said constant current until a voltage of said second battery becomes greater than said reference voltage;
resuming charging of said first battery until one of a charging current is less than a reference current and the charging current is less than a limit current indicating a state of full charge; and
resuming charging of said second battery until one of said charging current is less than said reference current and a charging current is less than said limit current indicating said state of full charge.

2. The method of claim 1, wherein said reference voltage is between approximately 70% and approximately 80% of a full charging voltage.

3. The method of claim 1, wherein said reference current is a current value at a time of approximately 80% of a full charging voltage.

4. The method of claim 1, wherein said limit current is a current value at a time of approximately 95% of a full charging voltage.

5. A method of charging a plurality of batteries comprising:
alternatively charging each of a plurality of batteries until a charging voltage of each of said plurality of batteries becomes a reference voltage;
resume charging the first battery until a charging current of the first battery is less than a reference current; and
further resuming charging of the first battery until said charging current of the first battery is less than a limit current indicating a state of full charging.

6. The method of claim 5, further comprising:
resume charging of the second battery until a charging current of the second battery is less than a reference current.

7. The method of claim 6, further comprising:
further resuming charging of the second battery until the charging current of the second battery is less than a limit current indicating a state of full charge.

8. The method of claim 5, wherein alternatively charging each of a plurality of batteries comprises:
charging a first battery with a constant current until a charging voltage becomes a first reference voltage;
charging a second battery with a constant current until a charging voltage becomes a second reference voltage;
charging a third battery with a constant current until a charging voltage becomes a third reference voltage; and
charging a fourth battery with a constant current until a charging voltage becomes a fourth reference voltage.

9. The method of claim 5, further comprising:
resume charging of the second battery until a charging current of the third battery is less than a reference current.

10. The method of claim 9, further comprising:
further resuming charging of the second battery until the charging current of the third battery is less than a limit current indicating a state of full charge.

11. The method of claim 5, wherein said reference voltage is between approximately 70% and approximately 80% of a full charging voltage.

12. The method of claim 5, wherein said reference current is a current value at a time of approximately 80% of a full charging voltage.

13. The method of claim 5, wherein said limit current is a current value at a time of approximately 95% of a state of a full charging voltage.

14. A method of charging a plurality of batteries comprising:
identifying a charging voltage/current characteristic of at least one of the plurality of batteries;
charging the first battery based on a first charging voltage/current characteristic of said first battery;
charging said second battery based on a first charging voltage/current characteristic of said second battery;
stopping charging of the first battery based on a second charging voltage/current characteristic of said first battery; and
complete charging of one of the first battery and the second battery based on the voltage/current characteristic of said one of the first battery and the second battery.

15. The method of claim 14, wherein said charging voltage/current characteristic has one of a voltage gradient and a current gradient according to a charging voltage/current of said first battery.

16. The method claim 15, wherein when said voltage of said first battery gradually rises, said current goes to a constant current and then said current gradient goes to substantially zero, thereby said voltage of said first battery having a predetermined gradient, and wherein when said first battery is charged by some degree of charging, said current drops, said current gradient has a negative value, and then said first battery has a constant voltage zone, thereby said voltage of said voltage gradient being substantially zero.

17. The method of claim 15, wherein in said first charging voltage/current characteristic, said voltage gradient is more than zero and a charging voltage has a reference of approximately 4.0V, and wherein a charging current has references of approximately 100mA and approximately 200mA.

18. The method of claim 15, wherein in said second charging voltage/current characteristic, said voltage gradient is more than zero and a charging voltage has a reference of approximately 4.2V, and wherein a charging current has references of approximately 100mA and approximately 200mA.

19. The method of claim 15, wherein in said first battery charging, said voltage gradient of said first battery is not more than zero, and a charging voltage of said first battery is not more than approximately 4.0V, and wherein if said voltage gradient is not more than zero and said charging current is not more than approximately 100mA and not less than approximately 200mA, then said first battery is charged and said second battery is not charged.

20. The method of claim 15, wherein in said second battery charging, said voltage gradient of said second battery is more than zero, and a charging voltage of said second battery is not more than approximately 4.0V; and wherein if said voltage gradient is not more than zero and said charging current is not more than approximately 100mA and not less than approximately 200mA, then said second battery is charged and said first battery is not charged.

21. The method of claim 15, wherein in said first battery charging, said voltage gradient of said first battery is more than zero, and a charging voltage of said first battery is less than approximately 4.2V, and wherein if said voltage gradient is not more than zero and said charging current is not less than approximately 200mA, then said first battery is charged and said second battery is not charged.

22. The method of claim 15, wherein in said second battery charging, said voltage gradient of said second battery is more than zero, and a charging voltage of said second battery is not less than 4.2V, and wherein if said voltage gradient is not more than zero and said charging current is not less than 200mA, then said second battery is charged and said first battery is not charged.

23. The method of claim 15, wherein in said charging completion, if said voltage gradient of said first or second battery is not more than zero, and a charging current is less than 200mA and not more than 100mA, then charging operation is completed.

24. The method of claim 15, wherein in said first battery charging, a voltage and a current are an initial rising voltage and an initial constant current applied to said first battery, respectively.

25. An apparatus to charge a plurality of batteries comprising:
a first circuit to apply at least one of constant voltage and constant current to a first battery;
a second circuit to apply at least one of constant voltage and constant current to a second battery; and
a control circuit to control operations of the first circuit and the second circuit such that the first battery and the second battery are alternatively charged and such that the first battery is charged based on charging voltage/current characteristics of the first battery and the second battery is charged based on charging voltage/current characteristics of the second battery.

26. The apparatus of claim 25, wherein the charging voltage/current characteristics relate to a reference voltage.

27. The apparatus of claim 26, wherein said reference voltage is between approximately 70% and approximately 80% of a full charging voltage.

28. The apparatus of claim 25, wherein the charging voltage/current characteristics relate to a reference current.

29. The apparatus of claim 28, wherein said reference current is a current value at a time of approximately 80% of a full charging voltage.

30. The apparatus of claim 25, wherein the charging voltage/current characteristics relate to a limit current.

31. The apparatus of claim 30, wherein said limit current is a current value at a time of approximately 95% of a full charging voltage.
